# FASCICULE DE BREVET EUROPEEN

(11) **EP 0 831 247 B1**
(45) Date de publication et mention de la délivrance du brevet: **04.08.1999**
(21) Numéro de dépôt: 97402096.8
(22) Date de dépôt: 10.09.1997
(51) Int. Cl.: F16G 5/20, B29D 29/10, F16H 7/24

(54) **Courroie striée, son procédé de fabrication et dispositif de transmission la comprenant**
Rippenriemen, Herstellungsverfahren dafür und diese enthaltendes Getriebe
Ribbed belt, fabrication method thereof and drive system having same

(30) Priorité: 20.09.1996 FR 9611487
(43) Date de publication de la demande: 25.03.1998
(73) Titulaire: HUTCHINSON, 75008 Paris (FR)
(72) Inventeur: Winninger, Alain, F-37000 Tours (FR); Sedilleau, Jean Claude, F-37170 Chambray les Tours (FR); Robert, Jean Jacques, F-37380 Monnaie (FR)
(74) Mandataire: Jacquard, Philippe Jean-Luc

(56) Documents cités:
- EP-A- 0 285 072
- EP-A- 0 381 281
- EP-A- 0 489 298
- EP-A- 0 625 650
- FR-A- 2 610 056
- US-A- 2 470 810
- US-A- 2 505 216
- US-A- 2 621 529
- US-A- 4 701 377

## Description

La présente invention a pour objet une courroie striée, notamment à profil en V, destinée aux applications automobiles.

La Demanderesse commercialise des courroies striées à dents en V, dites courroies à module adapté, lesquelles comportent des câblés à base de polyamide 6.6, et qui sont destinées à des appareils électroménagers tels que des lave-linge ou des sèche-linge.

De telles courroies présentent une courbe force-allongement qui caractérise leur module d'élasticité, et dont la pente moyenne entre 1% et 10% d'allongement est sensiblement égale à 5,5 daN/% d'allongement, par centimètre de largeur de courroie et par brin.

Le montage de ces courroies s'effectue sur extraxe fixe en les mettant en tension et en les relâchant une fois positionnées (montage dit automatique ou "snap-on").

Il n'existe par contre pas actuellement sur le marché de courroie de ce type correspondant aux applications automobiles.

La mise en oeuvre d'un câblé dans une courroie striée destinée aux applications automobiles, dans le but de transmettre de la puissance entre un moteur et un organe récepteur tel qu'un alternateur, pose de nombreux problèmes, notamment en raison du caractère acyclique de la courbe de puissance du moteur, cet acyclisme étant plus prononcé pour les moteurs à 4 cylindres que pour les moteurs à 6 ou 8 cylindres, et étant beaucoup plus important pour les moteurs Diesel que pour les moteurs à essence.

La tendance actuelle à augmenter les besoins électriques des véhicules automobiles (climatisation, etc..) conduit à augmenter l'ampérage des alternateurs et donc leur inertie, ce qui augmente d'autant les contraintes sur les courroies.

Un but de l'invention est une courroie pour automobile présentant une longévité élevée, même sous forte charge.

Un autre but de l'invention est une courroie susceptible de fonctionner avec des moteurs ayant un acyclisme élevé.

Un autre but de l'invention est une courroie pour automobile permettant de réaliser un filtrage des harmoniques supérieurs rentrant dans la composition du signal de vitesse et de tension de l'organe récepteur, en particulier lorsque ledit organe récepteur est un alternateur.

Un autre but de l'invention est une courroie susceptible d'être incorporée à un dispositif de transmission entre un arbre menant et un arbre mené par un montage automatique ("snap-on"), et avantageusement sans qu'il soit besoin de tendeur fixe.

Au moins certains de ces buts sont atteints grâce à une courroie striée de transmission de puissance comprenant une matrice en matériau élastomère et une armature longitudinale de câblés à base de polyamide 4.6, caractérisée en ce que l'armature est choisie de manière que la courbe force-allongement de la courroie présente une pente moyenne comprise entre 12 et 20 daN/% d'allongement par centimètre de largeur et par brin, et en ce que les câblés sont enroulés avec une tension nominale très faible ou quasi nulle, et en ce que les opérations de vulcanisation et de refroidissement après la vulcanisation sont réalisées sans mise en tension de la courroie. Ladite pente moyenne peut être en particulier comprise entre 12 et 15 daN/% d'allongement par centimètre de largeur et par brin.

On remarquera que la Demande de Brevet des Etats-Unis US-4 701 377 ainsi que la Demande de Brevet Européen EP-381 281 concernent une courroie striée dans laquelle les câblés à module d'élasticité élevé sont à base de polyamide 4.6, mais ce document ne suggère pas d'utiliser de tels câblés pour réaliser une courroie à faible module.

On notera en effet que la pente moyenne de la région utile de la courbe d'allongement, pour les courroies automobiles actuellement connues est de l'ordre de 30 daN/% d'allongement par cm de largeur et par brin. On notera en outre que l'allongement à la rupture de telles courroies est généralement inférieur à 10 %

Selon l'invention, ladite pente moyenne entre 1% et 10% d'allongement est de préférence sensiblement égale à 17 daN/% d'allongement par cm de largeur et par brin.

La courroie est avantageusement caractérisée en ce que la longueur de la courroie mesurée sur un banc d'essai conformément à la Norme ISO 9981 est inférieure de 1% à 6%, et par exemple de 1% à 5% ou bien de 1% à 4%, à celle de la longueur nominale de ladite transmission.

Selon un mode de réalisation préféré, la longueur de la courroie mesurée sur un dit banc d'essai est inférieure de 2% à 3 % à celle de la longueur nominale de la transmission, la valeur préférée étant sensiblement égale à 2%.

La courroie présente avantageusement une tension stable de fonctionnement de l'ordre de 14 à 20 daN/cm de largeur/brin, et de préférence comprise entre 14 et 17 daN/cm de largeur/brin.

Les câblés de la courroie ont un diamètre d qui est de préférence compris entre 0,7 et 1,3 mm.

L'intervalle entre les câblés est avantageusement compris entre 0 (câblage à spires jointives) et 4d, et de préférence compris entre 0 et 2d.

L'invention concerne également un procédé de fabrication d'une courroie telle que défini ci-dessus caractérisé en ce qu'il comporte les étapes suivantes :
a) former, par exemple sur un tambour, une ébauche de courroie, cette étape mettant en oeuvre un enroulement hélicoïdal de câblés à une tension nominale très faible ou quasi nulle,
b) vulcaniser l'ébauche sans la soumettre à une tension mécanique,
c) laisser refroidir l'ébauche vulcanisée sans la soumettre à une tension mécanique,
d) découper l'ébauche vulcanisée en courroies individuelles.

L'invention concerne également un procédé de montage dit "automatique" d'une courroie sur une poulie d'un dispositif de transmission. Il est caractérisé en ce qu'il comporte les étapes suivantes :
i) disposer contre la poulie un outil de montage de sorte qu'au moins une région de butée radiale de l'outil de montage soit en appui contre le contour externe de la poulie, l'outil de montage présentant une région de rampe s'étendant depuis la gorge de la poulie jusqu'à une région aval de manière à guider la courroie depuis la gorge en l'écartant de la poulie jusqu'à un plan espacé de ladite face de la poulie.
ii) déplacer radialement par effet de levier l'outil de montage en suivant le contour externe de la poulie de manière à chausser la courroie dans la gorge de la poulie en exerçant sur elle une traction
iii) une fois la courroie en place dans la gorge, dégager l'outil de montage.

L'invention concerne enfin un dispositif de transmission entre une poulie solidaire d'un arbre menant d'un moteur automobile et au moins une poulie solidaire d'un arbre mené d'un organe récepteur, ce dispositif comprenant une courroie telle que définie ci-dessus et étant dépourvue de tendeur fixe.

D'autres caractéristiques et avantages de l'invention apparaîtront mieux à la lecture de la description qui va suivre, donnée à titre d'exemple non limitatif, en liaison avec les dessins ci-annexés, dans lesquels :
- la figure 1 montre en coupe transversale une courroie striée selon l'invention,
- la figure 2 illustre un dispositif de transmission équipé d'une courroie selon l'invention,
- la figure 3a représente une courbe force-allongement correspondant respectivement à une courroie selon l'invention (courbe I) et à une courroie ne convenant pas à l'invention (courbe II), sur un banc d'essai représenté schématiquement à la figure 3b,
- les figures 4a et 4b représentent un essai comparatif d'entraînement d'un alternateur d'une automobile à l'aide d'une courroie, respectivement de l'Art Antérieur et selon l'invention,
- les figures 5a et 5b représentent un mode de réalisation préféré d'un outil de montage apte à assurer le montage automatique d'une courroie selon l'invention,
- et la figure 6 illustre le procédé de montage de la courroie.

Une courroie 10, sans fin, comporte une armature longitudinale 20 de câblés noyés dans une matrice d'élastomère 21, tel qu'un mélange de caoutchouc polychloroprène ou de caoutchouc naturel ou de tout type usuel connu pour la fabrication de courroies sans fin de transmission de puissance, en raison des bonnes propriétés d'adhérence qu'il présente. Cette courroie est avantageusement du type "striée", c'est-à-dire conformée sur sa face interne 22 suivant des dents 23 dont le pas P est normalisé, de même que leur section droite triangulaire comme représenté (courroie en V) ou bien trapézoïdale, chaque référence H, J, K, L, M de la Norme ISO 9981 définissant également l'épaisseur de la courroie mesurée entre le fond 24 des dents et la face externe de la courroie. La courroie 10 coopère avec des poulies 11, 12, 14, 15, 16, etc... dont la jante a un profil conjugué avec celui des dents 23, c'est-à-dire présente des gorges de même disposition, et de section droite semblable à celle, par exemple triangulaire ou trapézoïdale, des dents 23 qui y sont logées lors du fonctionnement du système de transmission. La courroie 10 présente deux brins 17 et 18.

Les courroies pour transmission automobile à profil en V présentent en général six dents de largeur l = 3,56 mm soit une largeur totale L de la courroie égale à 21,36 mm.

Selon l'invention, les câblés sont à base de polytétraméthylène adipamide ou polyamide 4.6. Il s'agit de résines préparées par polycondensation de 1,4-diaminobutane et d'acide adipique, telles que celles commercialisées sous la Marque STANYL par la Société DSM. Ces résines produites sous forme de fils sont ensuite préparées pour former des câblés.

On obtient des courroies utilisables dans les conditions sévères qui sont rencontrées dans les transmissions automobiles, en choisissant la dimension des câblés, et leur pas p de manière que la courroie présente une courbe force-allongement ayant, par exemple entre 1% et 10% d'allongement, une pente moyenne comprise entre 12 daN/% d'allongement par cm de largeur et par brin et 20 daN/% d'allongement, par cm de largeur et par brin, et de préférence sensiblement égale à 17 daN/% d'allongement par cm de largeur et par brin.

Cette pente peut être en particulier comprise entre 12 et 15 daN/% d'allongement par cm de largeur et par brin.

En outre, le procédé de fabrication des courroies selon l'invention diffère de celui qui est mis en oeuvre dans les courroies automobiles classiques, dans lesquelles les câblés sont maintenus en tension pendant tout le procédé de fabrication.

Dans le procédé classique, les câblés sont tout d'abord tendus pour être enroulés hélicoïdalement sur le tambour qui porte les nappes de gomme.

Les câblés qui sont sous tension lors de leur enroulement sur le tambour, sont encore sous tension lors de la vulcanisation de l'ébauche. Pour cette vulcanisation, l'ébauche est en général disposée dans un moule à la forme des courroies à réaliser, puis est pressée par expansion radiale sur la paroi intérieure du moule. Cette expansion radiale augmente la tension des câblés.

Cette tension des câblés disparaît en sortie de vulcanisation au démoulage de l'ébauche et cette annulation de la tension des câblés se traduit par un retrait et donc par une diminution de longueur des courroies.

Pour éviter ce retrait, les câblés sont, dans ledit procédé classique, mis en tension lors de leur refroidissement depuis la température de vulcanisation jusqu'à la température ambiante, en conservant leur longueur et en empêchant tout retrait.

Cette procédé présente un certain nombre de conséquences :
- après montage de la courroie, les variations de la température de service de la courroie se traduisent par des variations de longueur de cette courroie, et en particulier lorsque sa température augmente, la courroie se trouve ramenée à l'état initial et les câblés ont tendance à diminuer de longueur, ce qui se traduit par une augmentation de la tension de la courroie en service.

Lorsque la température de la courroie diminue, sa longueur tend à augmenter et sa tension diminue, ce phénomène étant aggravé par la déformation permanente résultant du fluage des câblés.

Au contraire, lors de la fabrication de la courroie selon l'invention, les câblés sont enroulées hélicoïdalement sur un tambour qui porte des nappes de gomme à une tension nominale qui devrait idéalement être nulle mais qui, en pratique, est très faible ou quasi nulle, ce qui correspond à un enroulement à la tension la plus faible possible, étant entendu qu'il subsiste toujours lors de l'enroulement une tension résiduelle très faible ou quasi nulle (par exemple inférieure ou égale à 5N) qui est inévitable, ne serait ce qu'en raison de la tension due au poids des câblés.

Ensuite, lors de la vulcanisation sous pression, l'ébauche est pressée sans expansion radiale sur la paroi intérieure du moule, et les câblés présentent alors une tension résiduelle presque nulle.

Après démoulage et lors du refroidissement, l'ébauche est refroidie sans être mise sous tension. Après refroidissement, les câblés présentent une tension nulle.

Une courroie selon l'invention présente de la sorte l'avantage que les variations de température de fonctionnement ont beaucoup moins d'influence sur la longueur des courroies que lorsque ledit procédé classique est mis en oeuvre. Cette plus faible variation de longueur en fonction de la température se traduit également par une plus faible variation de tension, ce qui évite les glissements des courroies sur les poulies et réduit le bruit généré.

Un des problèmes importants dans les applications automobiles est l'acyclisme, qui est dû à la répartition temporelle non uniforme des efforts produits en alternance par les pistons. Ceci induit des contraintes sévères sur les courroies, et en particulier une tension résiduelle de la courroie après stabilisation (c'est-à-dire après quelques heures de fonctionnement) qui est bien plus faible que dans le cas de transmissions dépourvues d'acyclisme, par exemple les transmissions à partir d'un moteur électrique.

Ces contraintes sévères ont eu pour effet que jusqu'à présent il n'a pas été possible de présenter des courroies ayant un module d'élasticité adapté à un montage dit automatique de la courroie sur une transmission automobile.

De manière remarquable, les courroies selon l'invention, qui ont une dite pente moyenne comprise entre 12 et 20 daN par % d'allongement, par cm de largeur et par brin, présentent une tension stable de fonctionnement après une dizaine d'heures de fonctionnement, qui est de l'ordre de 14 à 20 daN par cm de largeur et par brin.

On obtient de bons résultats avec des câblés de diamètre compris entre 0,7 et 1,3 mm, l'intervalle entre les câblés étant compris entre 0 et 4 d et de préférence 0 et 2 d.

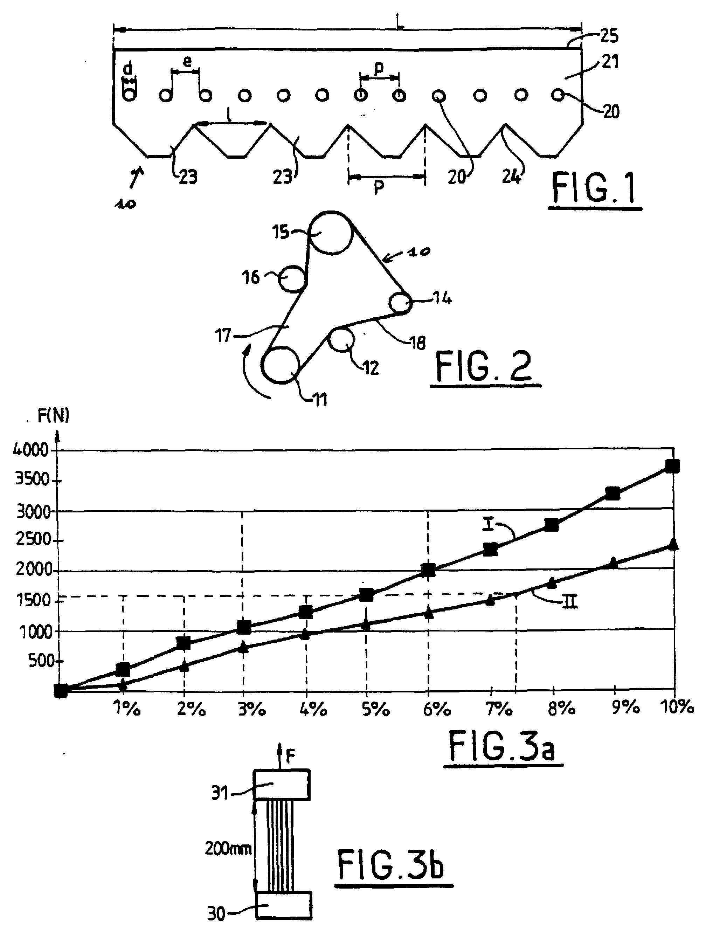

La figure 3a illustre le cas de deux courroies de transmission automobile ayant 6 dents de largeur 3,56 mm et présentant des câblés 20 en polyamide 4.6 et qui ont été fabriquées selon le procédé ci-dessus (enroulement à tension nominale presque nulle, vulcanisation et refroidissement sans mise en tension).

La courroie correspondant à la courbe I (câblés de 470 dtex X 6 X 3) présente une pente moyenne entre 1% et 10% d'allongement (établie par la méthode des moindres carrés) qui est égale à 17 daN par % d'allongement, par cm de largeur et par brin.

La courroie correspondant à la courbe II présente une dite pente moyenne entre 1% et 10% d'allongement qui est égale à 11 daN par % d'allongement, par cm de largeur et par brin.

Le test d'allongement permettant d'obtenir lesdites courbes est par exemple effectué sur un brin de longueur 200 mm pris entre deux mâchoires, l'une fixe 30 et l'autre mobile 31, à l'aide d'un dynamomètre (voir fig. 3b).

La pente moyenne mentionnée ci-dessus vise uniquement à donner une valeur caractéristique des courbes F/allongement, obtenue par la méthode des moindres carrés, mais il ne faut pas considérer que ces courbes sont des droites, car elles présentent en effet en chaque point une pente dont la valeur varie notablement le long de la courbe.

Une courroie automobile correspondant à la courbe I et présentant 6 dents de largeur 3,56 mm a été montée sur une transmission dépourvue de tendeur fixe. Son montage a été effectué en mettant en extension la courroie pour la positionner dans les poulies du dispositif de transmission. Après relâchement, la courroie est en place avec un allongement de 2% ce qui correspond à une force d'allongement initiale de 80 daN/brin (cf. courbe I), ce qui correspond à sensiblement 13 daN par dent et par brin. Après quelques heures de fonctionnement, la tension stabilisée est mesurée. Sa valeur est sensiblement égale à 6 daN par dent et par brin. Cette tension reste stable et la courroie présente une durée de vie élevée.

Une courroie automobile correspondant à la courbe II et présentant 6 dents de largeur 3,56 mm a été montée sur une transmission dépourvue de tendeur fixe. Son montage a été effectué en mettant en extension la courroie pour la positionner dans les poulies du dispositif de transmission.

Après quelques heures, la tension stabilisée est mesurée. Sa valeur est très inférieure à 6 daN par dent et par brin, et la courroie tend à glisser sur les poulies, ce qui provoque du bruit et la durée de vie de la courroie n'est pas satisfaisante.

Une autre contrainte à prendre en compte est en particulier due aux propriétés de filtrage des harmoniques supérieurs rentrant dans la composition du signal de vitesse et tension de l'organe récepteur. Ce phénomène est particulièrement important quand existent des inerties élevées, c'est-à-dire lorsque le véhicule automobile est équipé d'un alternateur.

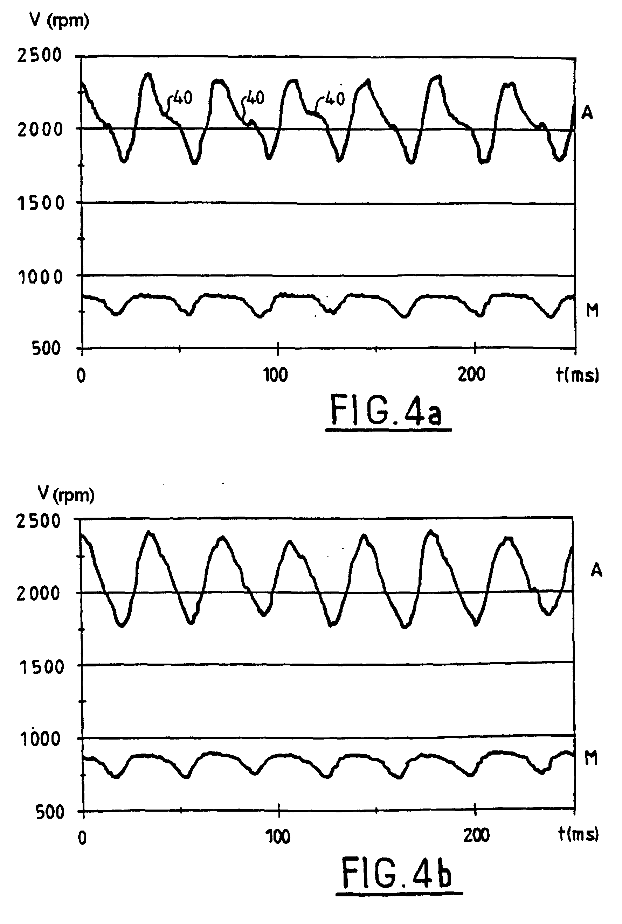

Ce phénomène de filtrage est illustré aux figures 4a et 4b. Sur chacune des figures, est représentée en fonction du temps, la vitesse de rotation de l'arbre moteur (courbe M), en l'espèce le moteur d'un véhicule Diesel au ralenti et celle de l'arbre (courbe A) d'un organe récepteur 14. La courroie 10 transmet la vitesse fournie par la rotation de la poulie 11 aux poulies 12, 14, 15 et 16 des organes récepteurs, notamment la poulie 14 qui entraîne l'alternateur qui présente un couple de 3,5 10⁻³ kg.m².

La courbe A de la figure 4a a été obtenue en utilisant une courroie standard du commerce, dont les câblés sont en polyester, après 48 h de fonctionnement, la courroie ayant atteint une tension de fonctionnement stabilisée.

On voit que la courbe A présente une anomalie répétitive 40 de forme plus ou moins stable et qui correspond à une rupture de pente à la décélération. Cette anomalie provient notamment du fait que la courroie retransmet à la poulie réceptrice 14 l'acyclisme du moteur (voir la courbe M). Ce phénomène est d'autant plus prononcé que le moteur présente plus d'acyclisme. On notera à titre indicatif qu'un moteur à essence à quatre cylindres présente un acyclisme de l'ordre de 6 % à 7 %. Cet acyclisme est de l'ordre de 4 % à 5 % pour un moteur à essence à 6 cylindres, mais il est généralement de l'ordre de 10 % à 15 % pour un moteur Diesel. Certains moteurs Diesel présentent même un acyclisme de l'ordre de 20 % à 25 %. Les anomalies 40 sont dues à l'action conjuguée de l'acyclisme du moteur et de l'inertie de l'organe récepteur et elles augmentent avec la valeur de l'acyclisme du moteur et avec l'inertie de l'organe récepteur.

La courbe de la figure 4b a été obtenue avec une courroie selon l'invention, correspondant à la courbe I de la figure 3a, après 48h de fonctionnement. La courroie a atteint une tension de fonctionnement stabilisé de 15 daN par cm de largeur et par brin. On voit que l'anomalie 40 a entièrement disparu. La courroie selon l'invention présente la propriété tout à fait remarquable de filtrer les harmoniques supérieurs rentrant dans la composition du signal de vitesse de l'organe récepteur.

La suppression de ces anomalies 40 entraîne une augmentation de la durée de vie de la courroie.

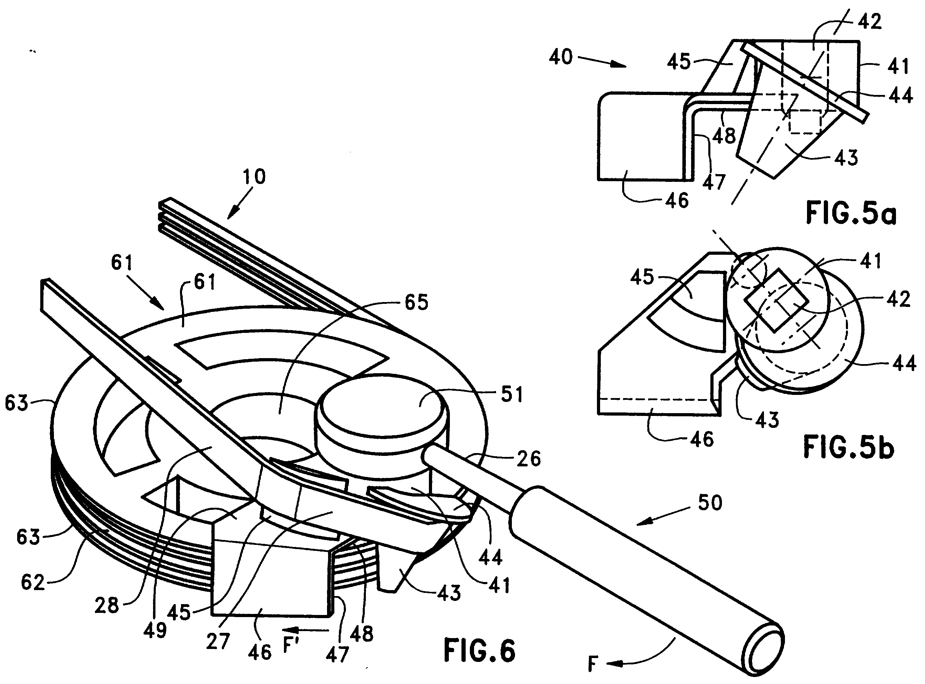

Le montage automatique d'une courroie sur un dispositif de transmission d'une automobile implique des efforts de traction importants. Un montage facilité peut être réalisé à l'aide de l'outillage décrit ci-après en liaison avec les figures 5a, 5b et 6. L'outil de montage 40, qui est plus particulièrement représenté aux figures 5a et 5b, présente une région centrale 41 présentant une ouverture carrée 42 permettant de recevoir un élément complémentaire 51 d'une clé d'actionnement 50. On notera que le levier 50 peut faire partie intégrante de l'outil 40. L'outil 40 présente une région conique inclinée 43 qui est surmontée par un méplat de guidage 44, et une pièce en forme de L qui présente, depuis la région centrale 42, une aile 49 dont la face inférieure plane 48 est destinée à venir reposer sur la face 61 de la poulie 60, et un volet d'extrémité 46 replié à sensiblement 90° par rapport à l'aile 49 et dont la face interne 47 vient en butée sur le rebord 63 du contour extérieur de la poulie 60.

L'aile 49 est surmontée d'une région de guidage 45 qui est sensiblement en arc de cercle.

Le procédé selon l'invention vise à "chausser" la courroie par effet de levier à l'aide de l'outil de montage 40 qui est guidé le long du contour externe (62,63) de la poulie 60, que celle-ci reste fixe ou bien puisse tourner autour d'un axe d'entraînement logé dans son ouverture centrale 65.

La région conique 43, limitée par le méplat incliné 44, et la région 45 permettent de guider par effet de rampe la région de brin 27 de la courroie 10 depuis sa région de brin 26 déjà logée dans la gorge 62 de la poulie 60 jusqu'à la région de brin 28 qui est écartée de la face 61. Ceci est obtenu en agissant sur le levier 50.

La procédure est la suivante. L'outil 40 est positionné de manière que la face 48 de l'aile 49 soit avantageusement en appui sur la face 61 de la poulie 60 et que la région conique 43 et la face 47 du volet 46 viennent en butée sur le contour externe de la poulie 60, à savoir le rebord 63. Il serait bien entendu possible de réaliser cet effet de butée en appuyant l'outil 40 dans la gorge 62 de la poulie 60.

La courroie 10 est prépositionnée dans la rampe formée par les régions (43,44,45). En actionnant le levier 50 dans le sens de la flèche F, on déplace l'outil 40 le long du contour de la poulie 60 dans le sens de la flèche F', ce qui permet de chausser la courroie 10 dans la gorge 62.

Dans le cas où la poulie 60 est fixe, ce déplacement de l'outil 40 s'effectue avec glissement. Dans le cas où la poulie 60 est mobile en rotation, ce déplacement de l'outil 40 accompagne la rotation de la poulie 60. Dans tous les cas, l'effet de levier conjugué avec l'effet de rampe permet un montage aisé.

En particulier, ce montage se situe dans le plan de la poulie 60 ou au voisinage de celui-ci, ce qui fait que le procédé convient au remplacement d'une poulie dans l'espace moteur, habituellement d'accessibilité réduite, d'un véhicule automobile.

## Revendications

1. Courroie striée de transmission de puissance comprenant une matrice en matériau élastomère et une armature longitudinale de câblés à base de polyamide 4.6, caractérisée en ce que l'armature est choisie de manière que la courbe force-allongement de la courroie présente une pente moyenne comprise entre 12 et 20 daN/% d'allongement par centimètre de largeur et par brin, et en ce que les câblés sont enroulés avec une tension nominale très faible ou nulle, et en ce que les opérations de vulcanisation et de refroidissement après la vulcanisation sont réalisées sans mise en tension de la courroie.

2. Courroie selon la revendication 1, caractérisée en ce que ladite pente moyenne est égale à 17 daN/% d'allongement et par cm de largeur et par brin.

3. Courroie selon une des revendications 1 ou 2, caractérisée en ce que la longueur de la courroie mesurée sur un banc d'essai conformément à la Norme ISO 9981 est inférieure de 1% à 6% à celle de la longueur nominale de ladite transmission.

4. Courroie selon la revendication 3, caractérisée en ce que la longueur de la courroie mesurée sur un dit banc d'essai est inférieure de 2% à 3% à celle de la longueur nominale de la transmission.

5. Courroie selon une des revendications précédentes, caractérisée en ce que la courroie présente une tension stable de fonctionnement de l'ordre de 14 à 20 daN/cm de largeur/brin.

6. Courroie selon une des revendications précédentes, caractérisée en ce que les câblés ont un diamètre d compris entre 0,7 et 1,3 mm.

7. Courroie selon une des revendications précédentes, caractérisée en ce que l'intervalle entre les câblés est compris entre 0 et 4 d.

8. Courroie selon la revendication 7, caractérisée en ce que l'intervalle entre les câblés est compris entre 0 et 2 d.

9. Procédé de fabrication d'une courroie selon une des revendications précédentes, caractérisé en ce qu'il comporte les étapes suivantes :
a) former une ébauche de courroie, cette étape mettant en oeuvre un enroulement hélicoïdal de câblés à une tension nominale très faible ou nulle,
b) vulcaniser l'ébauche sans la soumettre à une tension mécanique,
c) laisser refroidir l'ébauche vulcanisée sans la soumettre à une tension mécanique,
d) découper l'ébauche vulcanisée en courroies individuelles.

10. Procédé de montage d'une courroie selon une des revendications précédentes sur une poulie d'un dipositif de transmission, caractérisé en ce qu'il comporte les étapes suivantes :
i) disposer contre la poulie (60) un outil de montage de sorte qu'au moins une région de butée radiale (43,47) de l'outil (40) de montage soit en appui contre le contour externe (62,63) de la poulie (60), l'outil de montage présentant une région de rampe (43,45) s'étendant depuis la gorge (62) de la poulie (60) jusqu'à une région aval de manière à guider la courroie depuis la gorge (62) en l'écartant de la poulie jusqu'à un plan espacé de ladite face (61) de la poulie (60).
ii) déplacer radialement par effet de levier l'outil de montage en suivant le contour externe (62,63) de la poulie (60) de manière à chausser la courroie dans la gorge (62) de la poulie (60) en exerçant sur elle une traction.
iii) une fois la courroie en place dans la gorge (62), dégager l'outil de montage (40).

11. Dispositif de transmission entre une poulie solidaire d'un arbre menant d'un moteur d'automobile et au moins une poulie solidaire d'un arbre mené d'un organe récepteur, caractérisé en ce qu'il comporte une courroie selon une des revendications 1 à 8 et en ce qu'il est dépourvu de tendeur fixe.

## Patentansprüche

1. Rippenriemen für die Leistungsübertragung, mit einer Matrix aus Elastomermaterial und einer Längsarmierung von Kordfäden auf der Basis von Polyamid 4.6, dadurch gekennzeichnet, daß die Armierung derart gewählt ist, daß das Spannungs-Dehnungs-Diagramm des Riemens eine zwischen 12 und 20 daN/% Dehnung pro Zentimeter Breite und pro Trum liegende mittlere Steigung aufweist, daß die Kordfäden mit einer sehr geringen oder keiner Nennspannung gewickelt sind, und daß die Arbeitsschritte des Vulkanisierens und des Kühlens nach dem Vulkanisieren ohne Zugbeanspruchung des Riemens durchgeführt werden.

2. Riemen nach Anspruch 1, dadurch gekennzeichnet, daß die mittlere Steigung gleich 17 daN/% Dehnung und pro Zentimeter Breite und pro Trum ist.

3. Riemen nach einem der Ansprüche 1 oder 2, dadurch gekennzeichnet, daß die Länge des Riemens bei Messung auf einem Prüfstand gemäß der Norm ISO 9981 um 1% bis 6% geringer als diejenige der Nennlänge der Übertragung ist.

4. Riemen nach Anspruch 3, dadurch gekennzeichnet, daß die Länge des Riemens bei Messung auf einem solchen Prüfstand um 2% bis 3% geringer als diejenige der Nennlänge der Übertragung ist.

5. Riemen nach einem der vorhergehenden Ansprüche, dadurch gekennzeichnet, daß der Riemen eine stabile Betriebsspannung in der Größenordnung von 14 bis 20 daN/cm Breite/Trum aufweist.

6. Riemen nach einem der vorhergehenden Ansprüche, dadurch gekennzeichnet, daß die Kordfäden einen zwischen 0,7 und 1,3 mm betragenden Durchmesser d aufweisen.

7. Riemen nach einem der vorhergehenden Ansprüche, dadurch gekennzeichnet, daß der Zwischenraum zwischen den Kordfäden zwischen 0 und 4 d beträgt.

8. Riemen nach Anspruch 7, dadurch gekennzeichnet, daß der Zwischenraum zwischen den Kordfäden zwischen 0 und 2 d beträgt.

9. Verfahren zur Herstellung eines Riemens nach einem der vorhergehenden Ansprüchen, dadurch gekennzeichnet, daß es die folgenden Schritte aufweist:
a) Ausbilden eines Riemenrohlings, wobei dieser Schritt ein wendelförmiges Wickeln von Kordfäden mit einer sehr geringen oder keiner Nennspannung anwendet,
b) Vulkanisieren des Rohlings ohne Aufbringen einer mechanischen Zugbeanspruchung,
c) Abkühlenlassen des vulkanisierten Rohlings ohne Aufbringen einer mechanischen Zugbeanspruchung,
d) Schneiden des vulkanisierten Rohlings in vereinzelte Riemen.

10. Verfahren zum Montieren eines Riemens nach einem der vorhergehenden Ansprüche auf einer Riemenscheibe einer Kraftübertragungsvorrichtung, dadurch gekennzeichnet, daß es die folgenden Schritte aufweist:
i) Ansetzen eines Montagewerkzeugs gegen die Riemenscheibe (60) derart, daß mindestens ein Radialanlagebereich (43, 47) des Montagewerkzeugs (40) gegen die Außenkontur (62, 63) der Riemenscheibe (60) abgestützt ist, wobei das Montagewerkzeug einen Rampenbereich (43, 45) aufweist, welcher sich von der Rille (62) der Riemenscheibe (60) bis hin zu einem in Arbeitsrichtung nachfolgenden Bereich erstreckt, so daß der Riemen ab der Rille (62) bis hin zu einer beabstandeten Fläche der Seitenfläche (61) der Riemenscheibe (60) von der Riemenscheibe beabstandet geführt wird;
ii) radiales Bewegen des Montagewerkzeugs entlang der Außenkontur (62,63) der Riemenscheibe (60) mittels Hebelwirkung, so daß der Riemen in die Rille (62) der Riemenscheibe (60) eingezogen wird, indem eine Zugkraft auf ihn ausgeübt wird;
iii) nach erfolgter Anordnung des Riemens in der Rille (62) Entfernen des Montagewerkzeugs (40).

11. Vorrichtung für die Kraftübertragung zwischen einer Teil einer Antriebswelle eines Kraftfahrzeugmotors bildenden Riemenscheibe und mindestens einer Teil einer Abtriebswelle eines Abnehmerorgans bildenden Riemenscheibe, dadurch gekennzeichnet, daß sie einen Riemen nach einem der Ansprüche 1 bis 8 aufweist, sowie dadurch, daß sie keine fest angeordnete Spannvorrichtung aufweist.

## Claims

1. A power transmission striated belt which includes an elastomeric matrix and a lengthwise supporting structure consisting of polyamide 4.6 twisted strands, characterized in that the supporting structure is selected so that the stress-elongation diagram of the belt exhibits an average slope ranging from 12 to 20 daN/% of elongation per width centimeter and per strand, and in that the twisted strands are wound with a very small nominal tension, or almost without any tension, and in that the curing operation and the cooling operation after curing are carried out without any belt tensioning.

2. The belt according to claim 1, characterized in that said average slope is equal to 17 daN/% of elongation per width centimeter and per strand.

3. The belt according to claim 1 or claim 2, characterized in that the belt length, as measured on a test bench according to the ISO Standard 9981, is lower by 1 % - 6 % than the nominal length of the drive system.

4. The belt according to claim 3, characterized in that the length of said belt, as measured on a test bench, is lower by 2 % - 3 % than the nominal length of said drive system.

5. The belt according to any preceding claim, characterized in that the belt has a stable operating tension ranging from 14 to 20 daN/width centimeter/strand.

6. The belt according to any preceding claim, characterized in that the twisted strands have a diameter d ranging from 0.7 to 1.3 mm.

7. The belt according to any preceding claim, characterized in that the space between twisted strands ranges from 0 to 4 d.

8. The belt according to claim 7, characterized in that the space between twisted strands ranges from 0 to 2 d.

9. Manufacturing method for a belt according to any preceding claim, characterized by the following steps :
a) forming a belt blank, such step including the helical winding of twisted strands at a nominal tension either very low or almost null ;
b) curing the blank without subjecting it to any mechanical tensioning ;
c) allowing the cured blank to cool down without subjecting it to any mechanical tensioning ;
d) cutting the cured blank into individual belts.

10. Method for mounting a belt according to any preceding claim onto a pulley of a drive system, characterized by the following steps :
i) positioning a mounting tool close to the pulley (60), so that at least a radial thrust area (43, 47) of the mounting tool (40) rests against the girth (62, 63) of the pulley (60), the mounting tool including a ramp area (43, 45) extending from the groove (62) of the pulley (60) to a downward area, for the guidance of the belt right from the groove(62) while keeping it away from the pulley till it reaches a plane spaced from said surface (61) of the pulley (60) ;
ii) radially moving said mounting tool by a lever effect, while following the girth (62, 63) of the pulley (60) so as to fit the belt into the groove (62) of the pulley (60) while pulling on it ;
iii) once the belt is positioned in the groove (62), disengaging the mounting tool (40).

11. Drive system between a pulley integral with a driving shaft of a car engine and at least one pulley integral with a driven shaft of a receiving device, characterized in that it comprises a belt according to any one of claims 1 to 8, and in that it is free from any fixed tighteners.
